# EUROPEAN PATENT APPLICATION

(11) **EP 3 434 221 A1**
(43) Date of publication of application: **30.01.2019**
(21) Application number: 18184812.8
(22) Date of filing: 20.07.2018
(51) Int. Cl.: A61C 1/18, A61C 8/00, A61C 1/00, A61C 1/08

(54) **SYSTEM FOR CONTROLLING CORRECT JAWBONE DRILLING**

(30) Priority: 26.07.2017 IT 201700085598
(71) Applicant: I.D.I. Evolution S.r.l., 20900 Monza (MB) (IT)
(72) Inventor: Piantoni, Andrea, 20855 Lesmo (MB) (IT); Arosio, Paolo, 20871 Vimercate (MB) (IT)
(74) Representative: Martegani, Franco

(57) **Abstract**

A system for controlling correct bone drilling for insertion operations of dental prostheses comprising three microprocessors: a first microprocessor (11) for controlling a micromotor (12) of a handpiece (13), a second microprocessor (14) destined for auxiliary services, a third microprocessor (15) destined for verifying values detected in the drilling phase, comparing them with preselected values with the correction necessary for a correct drilling operation, a "calculation" of a value called "thermal risk index" being effected in the third microprocessor (15); and a calculation group (16) of the angle of a drilling bit (17), the system providing that the first microprocessor (11) manages the micromotor (12) of the handpiece (13), and controls the torque and speed of said micromotor (12), a control pedal (18) being connected to the first microprocessor (11), the second microprocessor (14) is operatively connected to a card (19), a first sensor being provided, which verifies the presence of the drilling bits, and destined for managing a peristaltic pump (21) and a second and third sensor (22,23).

## Description

The present invention relates to a system for controlling correct bone drilling for insertion operations of dental prostheses.

It is common experience in mechanics that cutters, of whatever type they may be and for any application, when they rotate during drilling, heat up due to friction from contact with the material they are drilling.

This heat is consequently transmitted to the body they are drilling, heating it according to the capacity of the body being drilled or cutter that is operating to dissipate heat.

In orthopedics, and more specifically, in dental implant surgery, bone drilling is a fundamental aspect.

Bone drilling is carried out with handpieces equipped with micromotors specifically studied for this use. Furthermore, not only are the motor and handpiece designed for this specific use, but the rotating instruments (cutters) are also specialized.

It should be known, in fact, that the bone tissue that is perforated consists, in variable percentages, of an inorganic part (calcium with various crystalline structures) and an organic part (collagen) maintained by a pool of cells belonging to the connective and osteocytic line.

The organic part is, like all the tissues of our body, very sensitive to temperature. It should be taken into account that, over 45°C, the proteins, which form the matrix of the organic substance, lose their structural organization with the death of the single cell. This event does not necessarily represent the death of the whole bone, but it makes healing processes much longer and less predictable.

This objective biological consideration influences the attitude that clinicians have during the drilling of the bone tissue, especially if this must incorporate an alloplastic device without the onset of surrounding inflammatory processes.

Consequently, in the presence of bone drilling operations, the aim has always been to preserve the organic tissue with its ability to immediately start the healing processes.

It follows that in order to obtain this, the preparation of the "hole" in the bone is effected trying not to exceed the deproteinization temperatures previously reported.

This operation is not so simple as the variables to be taken into consideration that can influence the temperature of the cutter are really numerous.

The present applicant, for example, has developed an invention, which is the object of European patent EP1842484, which relates to an electric motor control system for surgical applications.

This system is based on the fact that the motor can be programmed according to the predefined type of processing. And this processing can depend on the patient's anamnestic data or on the pre-operative data identified, for example, radiologically.

A specific electronics allows useful information to be obtained for the programming of the motor referring to the rotation rate and quantity of absorbed current which, correctly parameterized, suggest the type of substrate involved and resistance of the instrumentation or device used, and also the interface with the instrument kit makes it possible to suggest the correct sequence of the instruments to be used.

In any case, the objective is to avoid the risk of deteriorating, with bone drilling, the capacity of the organic tissue of initiating immediate and correct healing processes.

In any case, therefore, it is important to try not to exceed deproteinization temperatures that would lead to definitive deterioration of the bone tissue.

And this in the presence of any cutter design that is used (for example twist drill and triflute burrs).

The main objective of the present invention is to identify a system that is capable of avoiding such irreversible deterioration.

A further objective of the present invention is to provide a system for controlling correct bone drilling for insertion operations of dental prostheses capable of solving the drawbacks of the known art indicated above in an extremely simple, economical and particularly functional manner.

A further objective of the present invention is to provide a particularly advantageous system which is such as to not create problems to the bone that is being drilled.

The above objectives are achieved by a system for controlling correct bone drilling for insertion operations of dental prostheses created according to the independent claim 1 and the following sub-claims.

The structural and functional characteristics of the present invention and its advantages with respect to the known art will appear even more evident from the following description, referring to a figure that proposes a schematization in some main elements of a system for controlling correct bone drilling for insertion operations of dental prostheses according to the present invention.

Through a system for controlling correct bone drilling for insertion operations of dental prostheses according to the present invention, the aim is to detect and monitor whether one is operating in compliance with the thermal criticality of the drill tip. As previously stated, the bone drilling is in fact carried out with handpieces equipped with micromotors and bearing specific cutters.

This bone drilling operation in the patient's mouth must be carried out not exceeding the deproteinization temperatures so as not to lose the structural organization of the cells leading to the death of the individual cells.

In order to do so, the system according to the invention provides for three different specifically dedicated microprocessors:
- a first specific microprocessor 11 for controlling a micromotor 12 of a contra-angle or handpiece 13 used for drilling the bone,
- a second specific microprocessor 14 for auxiliary services, and
- a third specific microprocessor 15 or main microprocessor for verifying a series of values detected in the drilling or perforation phase, comparing them with a series of preselected values and the consequent correction and regulation necessary for a correct drilling operation. In this third microprocessor 15 there is the "calculation", so to speak, of a value called "thermal risk index".

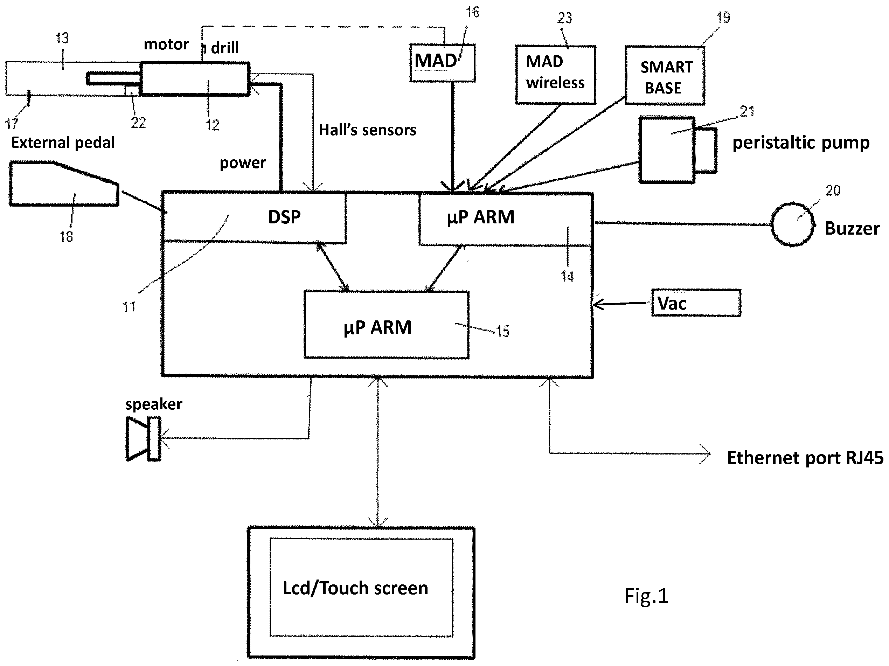

The attached figure proposes a schematization in some main elements of an arrangement of a system according to the present invention.

In the figure, particular attention is paid to the arrangement of the micromotor 12 for the contra-angle or handpiece 13 and to a group 16 for calculating the angle of the drilling bit 17 with respect to a correct operating axis of the instrument.

This group 16 is also referred to as the "MAD" system (Micro Angle Detector) and assists the physician during the initial drilling phase during an implantology operation, allowing this operation to be effected knowing the inclination of the hole for creating a correct implant alveolus.

As can be seen from the diagram, the first microprocessor 11 is a unit for the real-time control of the surgical motor and relative resources which can act directly on the functions of the motor itself. This unit can also be defined as DSP (Digital Signal Processor) or RTU (Real Time Motor Control Unit).

The microprocessor or unit 11 manages the surgical micromotor 12 of the handpiece 13, controls the torque and speed of this micromotor 12, manages the movement anomalies and calculates the parameters relating to the behavior of the handpiece 13 together with the group 16.

A control pedal 18 is connected to the microprocessor or unit 11 which can act directly on the behavior of the micromotor 12 in relation to specific programmed parameters.

The control of the micromotor 12 is therefore delegated to the above-mentioned first microprocessor or unit 11 which communicates with the main microprocessor 15 called MCU (Main Control Unit). In particular, the microprocessor or unit 11 interfaces with the main microprocessor 15 through a bidirectional serial channel.

As shown in the schematic figure, the second microprocessor 14 destined for auxiliary services has been seen to be operatively connected to the group 16 for calculating the angle of the drilling bit 17.

Furthermore, this second microprocessor 14 is operatively connected to a card 19, called "Smart Base", of a surgical tray (not shown).

This tray comprises a base plate which detects, through an electronic/electromechanical sensor, whether the drills are present, and indicates their absence by means of an acoustic and/or visual warning device 20 (for example a buzzer or a LED) and supplies this information to the microprocessor 14, which in turn is connected to the main microprocessor 15. This exchange of information is also managed on a serial protocol. In a preferred embodiment, the card or "Smart Base" 19 is connected to the microprocessor 14 via Bluetooth.

Furthermore, the second microprocessor 14 is destined for managing a peristaltic pump 21 and a second and third sensor 22 and 23.

In particular, the second sensor 22 is positioned on the handpiece 13 and is connected by cable. The third sensor 23 on the other hand is positioned on the patient and communicates via wireless (bluetooth). The second sensor 22 is usually indicated as "Mad Drill" integral with the drill and the third sensor 23 as "Mad Head" or compensator, integral with the patient's head or jaw. In any case, both sensors 22 and 23 are managed by the second microprocessor 14.

The data exchange between the main microprocessor MCU 15 and the second microprocessor 14 is on serial protocol. The second microprocessor 14 sends a series of variables to the main microprocessor MCU 15 in order to monitor the state of the group 16 and sensors 22, 23 (angle, compensated angle, battery status, calibration state of the sensors, etc.).

The above-mentioned second microprocessor 14 receives, from the main microprocessor MCU 15, a series of variables for controlling the group 16, the sensors 22, 23 and the peristaltic pump 21 in order to define and adjust parameters (target angle, calibration control, pump on/off, reset alarms, pump rate, etc.).

Consequently, summarizing what has just been mentioned, the second microprocessor 14 sends to the main microprocessor MCU 15, a series of variables for monitoring the state of the surgical micromotor 12 (speed, motor torque, depth of the tapping, alarms, useful energy for the cutter, state of the buttons of the pedal board, rotation direction, calibration result, motor alarms - over-speed, over-current, motor blocked, etc.).

Likewise, the second microprocessor 14 receives from the main microprocessor MCU 15, a series of variables for controlling the surgical micromotor 12 (speed, motor torque limit, tapping depth, thread pitch, rotation direction, calibration control, running control, alarm reset, etc.).

It should also be noted that the pedal 18 has been provided, which communicates directly with the first microprocessor 11.

The "accelerator" function has been introduced using a potentiometric pedal.

Furthermore, in order to improve the safety of the device, a hardware block of the micromotor 12 has been provided if the accelerator of the pedal 18 is released. The hardware block on the micromotor 12 is able to stop the micromotor in any condition in which the control software is located (as it is specifically a hardware block).

The pedal 18 is connected to the first microprocessor 11 by cable.

It should also be noted that the group 16 has been said to assist the physician during the initial drilling phase. In order to facilitate this operation, in fact, the group is equipped with a sound signal that allows the physician to know how far it is from the initial inclination value by changing the frequency of the sound pulse without taking his eyes off the patient's mouth. An increase in the sound frequency will indicate approach towards the inclination set, vice versa a decrease in the frequency of the sound pulse will indicate removal from this value.

In the system according to the present invention, in order to satisfy the requirement of estimating the thermal criticality of the drilling bit, it has been said that three different microprocessors have been used.

In particular, the introduction of these three microprocessors has brought significant advantages.

The first microprocessor 11 has been specifically studied and designed for controlling the micromotor 12. The use of this specific microprocessor 11 allows the performance of the micromotor control to be improved in terms of precision and reliability.

The second microprocessor 14 is destined for managing the auxiliary services (group 16, sensors 22, 23, peristaltic pump 21, card 19 ("Smart Base") and surgical tray with control of the presence and withdrawal correctness and use of the drilling cutters (for example through an electronic/electromechanical sensor that detects if they are present, etc.).

The third microprocessor 15 or main microprocessor MCU (for example an iMX6 microprocessor) on which the Android runs with the user interface that correlates and controls the other two microprocessors, determining the maintenance of specific predetermined requirements.

It should be pointed out, in fact, that the first microprocessor 11 and the main microprocessor 15 are included in the calculation of the thermal risk index.

The thermal risk index is calculated as follows:
- the first microprocessor 11, processing the data detected by the micromotor 12 (current, speed and torque), effects the calculation of the useful energy supplied to the tip of the contra-angle cutter 13. This energy is calculated as the integral over time of the product between the torque supplied and the speed of the micromotor. This value is averaged with a digital low-pass filter of the first order discretized with the Tustin rule. The first microprocessor 11 communicates the value of the energy thus calculated to the main microprocessor 15, in this example to the iMX6;
- in the iMX6 microprocessor, a static library is developed in an android environment that has the following task: it receives at the input the value of the useful energy at the tip of the cutter calculated by the first microprocessor 11, together with other parameters such as the type of cutter, the rotation rate at which the energy value has been calculated, the torque supplied, the functioning time of the motor during the energy calculation. The calculation algorithm of the thermal index processes these parameters, and with statistical methods it compares them and matches them with a predetermined database of measurements resulting from countless field experiments.

If the algorithm assumes an excessive overheating of the tip of the cutter, it provides an alarm signal to the Android system that will appropriately alert the operator.

It has thus been seen what the advantages and innovative contents are of a system for controlling correct bone drilling for insertion operations of dental prostheses according to the invention.

The system of the invention allows numerous parameters to be taken into account such as the speed of the cutter, the drilling time, the drilling technique, the cutter size (diameter), the presence or absence of an external cooling system with fresh physiological solution, the pressure exerted on the cutter, the wear of the cutter, etc.

In this type of system it has been taken into account that the temperature is a consequence of the amount of friction that develops during the preparation of the hole and, while having different causes, it can be identified as the amount of energy needed for maintaining the rotation of that instrument. In a system according to the invention it is possible to constantly monitor the torque during the rotation phases so as to "derive" or estimate the temperature of the cutter or at least identify a threshold value above which the risk of irreversible damage can be reached.

In the system of the invention, a statistically acceptable correlation has thus been found between a unit of measurement of the drilling fatigue (torque) correlated with the defined "thermal risk index" detected in relation to the temperature of the milling cutter.

In the system of the invention, variants other than those shown and described by way of non-limiting example may naturally also be introduced, as well as different materials, units and functioning modes and the assembly thereof.

The objective mentioned in the preamble of the description has thus been achieved.

The protection scope of the present invention is defined by the enclosed claims.

## Claims

1. A system for controlling correct bone drilling for insertion operations of dental prostheses **characterized in that** it provides in combination, three different specific microprocessors:
- a first microprocessor (11) destined for controlling a micromotor (12) of a contra-angle or handpiece (13) used for drilling the bone,
- a second microprocessor (14) destined for auxiliary services,
- a third microprocessor (15) or main microprocessor destined for verifying a series of values detected in the drilling or perforation phase, comparing them with a series of preselected values with the consequent correction and regulation necessary for a correct drilling operation, a "calculation" of a value called "thermal risk index" being effected in said third microprocessor (15); and
- a calculation group (16) of the angle of a drilling bit (17) with respect to a correct operating axis of the instrument which assists the physician during an initial drilling phase in implant surgery, said system also providing:
that said first microprocessor (11) manages the surgical micromotor (12) of the handpiece (13), controls the torque and speed of said micromotor (12), manages movement anomalies and calculates parameters relating to the behaviour of the handpiece (13), a control pedal (18) being connected to said first microprocessor (11) in relation to programmed parameters and said main microprocessor (15), wherein said first microprocessor (11) processes said data detected by the micromotor (12) and calculates the useful energy supplied to the tip of the contra-angle cutter (13) and communicates the value of the energy thus calculated to the main microprocessor (15), thus controlling the micromotor (12) in relation to specific programmed parameters,
said second microprocessor (14) is operatively connected to a card (19) of a surgical tray carrying drilling bits, a first sensor being provided, which verifies the presence of said drilling bits and destined for managing a peristaltic pump (21) and a second and third sensor (22,23) for sending a series of variables to said main microprocessor (15) in order to monitor the status of the group (16) and sensors (22,23) in order to identify a series of parameters (target angle, calibration command, on/off pump, alarm reset, pump speed, etc.) for controlling the surgical micromotor (12),
said main microprocessor (15) receives at the input the value of the useful energy at the tip of the cutter calculated by the first microprocessor (11), together with other parameters (type of cutter, rotation rate at which the energy value has been calculated, the torque supplied, the functioning time of the motor during the calculation of the energy) and, with a calculation algorithm, processes these parameters, and with statistical methods it compares them and matches them with a predetermined database of measurements resulting from field experiments previously effected, and if the algorithm assumes an excessive overheating of the tip of the cutter, it provides an alarm signal to the operator.

2. The control system according to claim 1, **characterized in that** an acoustic and/or visual warning device (20) which indicates the absence of said drilling bits, is associated with said first sensor that verifies the presence of said drilling bits.

3. The control system according to claim 1 or 2, **characterized in that** said second sensor (22) is positioned on the handpiece (13) and the third sensor (23) is positioned integral with the patient's head or jaw where the drilling must be performed.

4. The control system according to one or more of the previous claims, **characterized in that** it provides a hardware block of the micromotor (12) if the accelerator of the pedal (18) is released.

5. The control system according to one or more of the previous claims, **characterized in that** said group (16) provides a sound signal which allows the physician to know how far it is from the initial inclination value by changing the sound pulse rate without turning away from the patient's mouth.

6. The control system according to claim 1, **characterized in that** said energy is calculated as the integral over time of the product between the torque supplied and the speed of the micromotor (12).
